Europäisches Patentamt

European Patent Office

Office européen des brevets

(11) Veröffentlichungsnummer: **0 146 716**
**B1**

(12) **EUROPÄISCHE PATENTSCHRIFT**

(45) Veröffentlichungstag der Patentschrift:
07.12.88

(51) Int. Cl.⁴: **B 62 D 23/00**

(21) Anmeldenummer: **84112736.8**

(22) Anmeldetag: **23.10.84**

(54) **Wagenkasten.**

(30) Priorität: **24.12.83 DE 3346986**

(43) Veröffentlichungstag der Anmeldung:
**03.07.85 Patentblatt 85/27**

(45) Bekanntmachung des Hinweises auf die Patenterteilung:
**07.12.88 Patentblatt 88/49**

(84) Benannte Vertragsstaaten:
**DE FR GB IT SE**

(56) Entgegenhaltungen:
**CH-A- 608 997**
**DE-A- 2 018 802**
**DE-A- 3 008 840**
**DE-U- 1 710 008**
**DE-U- 7 721 221**

(73) Patentinhaber: **Fleck, Andreas, Erikastrasse 15,
D-2000 Hamburg 20 (DE)**

(72) Erfinder: **Die Erfinder haben auf ihre Nennung verzichtet**

(74) Vertreter: **Fleck, Thomas, Dr.Dipl.-Chem. et al,
Patentanwälte Raffay, Fleck & Partner
Postfach 32 32 17, D-2000 Hamburg 13 (DE)**

ACTORUM AG

## Beschreibung

Die Erfindung bezieht sich auf einen Wagenkasten für Personenkraftwagen, dessen tragende Struktur aus Hohlprofilen besteht, welche durch Knotenelemente miteinander verbunden sind.

Aus der DE-A-2 018 802 ist ein Rohrrahmenaufbau für Kraftfahrzeuge bekannt, bei dem für die tragende Struktur ausschliesslich gerade Rohrabschnitte aus Stahl Verwendung finden. Die vorzugsweise als Vierkantrohr ausgebildeten Stahlrohre sind durch Knotenelemente miteinander verbunden. Die Verbindung geschieht dabei in der Weise, dass die Rohrstücke auf Stutzen an den Knotenelementen aufgeschoben werden, die Rohrstücke die Knotenelemente also umgreifen.

Die Verwendung von Stahlrohren für die tragende Struktur eines Personenkraftwagens stellt zwar eine gute Stabilität des Fahrzeuges sicher, jedoch ist der Anschluss der flächigen Karosseriebauteile sehr aufwendig. Deshalb dürfte die bekannte Konstruktion in der Praxis nur mit grossen Kompromissen zu realisieren sein. Auch was die Knotenelemente anbelangt, so sind diese nur zum Verbinden der Stahlrohre ausgebildet und weder geeignet noch bestimmt, zusätzliche Aufgaben zu übernehmen. Die bekannte Konstruktion unterscheidet sich in ihrem Aufbau nicht wesentlich von derjenigen, welche vornehmlich zu Beginn dieses Jahrhunderts mit anderen Materialien üblich war, nämlich der Aufbau der Karosserie durch eine Rahmenstruktur, welche in weiteren Arbeitsgängen mit Aussenhautteilen verkleidet wurde. Ein derartiger Aufbau bedingt einen beträchtlichen Bauaufwand und reduziert bei vorgegebenen Aussenmassen den Innenraum. Aus diesen Gründen ist man zu einem selbsttragenden Aufbau übergegangen, welcher heute bei der Grossserienfertigung fast ausnahmslos Verwendung findet. Dabei werden die tragenden Strukturen nicht separat aufgebaut, sondern sind Bestandteile der Aussenhaut.

Zum Aufbau der selbsttragenden Karosserien werden hauptsächlich Stahlbleche eingesetzt, welche im Tiefziehverfahren verformt werden. Die Presswerkzeuge zum Verformen der Bleche sind zwar verhältnismässig teuer, jedoch lassen sie sehr hohe Stückzahlen zu, so dass diese Vorgehensweise bei einer Grossserienfertigung nach wie vor die kostengünstigste Lösung darstellt. Aufgrund der hohen Werkzeuginvestitionen gestaltet sich das beschriebene Verfahren für Kleinserien jedoch sehr kostenintensiv.

Der Erfindung liegt nun die Aufgabe zugrunde, einen Wagenkasten für Personenkraftwagen so auszugestalten, dass dieser kostengünstig in Kleinserien herstellbar ist. Neben einer einfachen Herstellbarkeit sollen die einzelnen Elemente des Aufbaus ausser ihren tragenden Aufgaben auch zusätzliche Funktionen übernehmen, wodurch gegenüber den bekannten Lösungen einzelne Bauteile sowie Platz und Gewicht eingespart werden kann.

Die Erfindung geht von der Überlegung aus, dass für Kleinserien Giesswerkzeuge und Werkzeuge zum Strangpressen wesentlich billiger sind als Presswerkzeuge. Für den Wagenkasten werden deshalb Strangpressprofile und Gussknoten eingesetzt. Um die Kosteneinsparung bei den Werkzeugen nicht durch einen erhöhten Aufwand für den weiteren Fahrzeugbau zu kompensieren, sollen im Gegensatz zu den bekannten Aufbauten die Strangpressprofile und/oder die Knotenelemente zur Bildung von Abschnitten der Aussenhaut geeignet sein. Dies lässt sich bei Leichtmetallstrangpressprofilen in bezug auf die Oberflächengüte besonders leicht verwirklichen. Im Gegensatz zu Stahlprofilen lassen sich bei Leichtmetall-Stranpressprofilen ausserdem ohne grossen Aufwand sehr geringe Wandstärken und komplizierte Querschnitte realisieren, so dass sich in einfacher Weise Anschlüsse für Aussenhautteile schaffen lassen. Aber auch Aufnahmen für Dichtungen oder ähnliches lassen sich durch im Strangpressprofil ausgebildete Rinnen und Hinterschneidungen herstellen.

Die durch Strangpressprofile gebildeten Hohlprofile weisen im wesentlichen einen gleichbleibenden Querschnitt auf und sind zumindest teilweise gebogen. Die gebogenen Abschnitte ermöglichen eine wesentlich freiere Gestaltung der Fahrzeugkarosserie, ohne dass dafür hohe Werkzeuginvestitionen notwendig sind. Durch die aus der DE-A 2 018 802 bekannten geraden Hohlprofilen lassen sich allenfalls Nutzfahrzeuge aufbauen, bei denen es weniger auf eine ansprechende Karosserieform ankommt.

Die Querschnitte der Strangpressprofile können ähnlich den Querschnitten der heute verwendeten Blechkonstruktionen sein, bieten darüberhinaus aber weitergehende Möglichkeiten, die durch das Strangpressverfahren gegeben sind. Rohrförmige Bauteile, wie beispielsweise Längsträger und Dachsäulen, werden heute meist aus zwei oder mehr gepressten Blechteilen zusammengesetzt. Dies bedingt einen hohen Aufwand für das Zusammenfügen, insbesondere wenn es wie im Fahrzeugbau auf hohe Massgenauigkeit ankommt. Die gewünschte hohe Massgenauigkeit und die zum Teil komplizierten Querschnittsformen lassen die in der DE-A-2 018 802 vorgeschlagenen Stahlrohre nicht zu. Die zusätzlichen Vorteile, die der Einsatz von Leichtmetall hinsichtlich Gewicht und Korrosion bietet, müssen hier nicht besonders hervorgehoben werden.

Dadurch, dass die Knotenelemente aus Leichtmetall bestehen, können diese verbessert an ihre Aufgaben angepasst werden. Knoten aus Blech müssen sich zu sehr an den Möglichkeiten ihrer Herstellung orientieren und können ausserdem oft nur durch komplizierte Schweisseinrichtungen zusammengefügt werden. Bei aus Leichtmetall im Giess-, Spritz- oder Schmiedeverfahren hergestellten Knoten besteht ausserdem die Möglichkeit, die Knotenelemente mit geringem Aufwand — z.B. durch Anformen von Befestigungsflanschen — für zusätzliche Funktionen auszubilden.

Die Knotenelemente können beispielsweise aus Aluminium-Spritzguss hergestellt oder vorteilhaft durch ein Leichtmetall-Schmiedeteil gebildet sein. Für das Schmieden von Leichtmetall bietet sich das erst in neuerer Zeit entwickelte «superplastische Schmieden» an, bei welchen der Rohling erwärmt und dann durch Pressen verformt wird.

Ein oder mehrere Knotenelemente sind durch mindestens zwei Schalen gebildet, welche den Endbereich der eingelegten Hohlprofile umschliessen. Durch eine mehrteilige Ausgestaltung der Knotenelemente können diese meist einfacher hergestellt werden. Eine mehrteilige Ausbildung bestimmter Knotenelemente ermöglicht oft auch ein leichteres Einsetzen der Hohlprofile, wodurch die Voraussetzung für eine teil- oder vollautomatische Montage geschaffen wird. Die mehrteilige Ausgestaltung der Knotenelemente erlaubt zudem meist ein besseres Verbinden der Bauteile, insbesondere wenn man an den Einsatz eines Klebers denkt.

Aus der DE-A-3 008 840 ist ein Wagenkasten für Personenkraftwagen bekannt, dessen tragende Struktur Hohlprofile umfasst, welche durch Knotenelemente untereinander verbunden sind. Die Knotenelemente werden dabei durch mindestens zwei Schalen gebildet. Diese Knotenelemente, aber auch die sie verbindenden Hohlprofile sind allesamt aus Blechpressteilen hergestellt. Dieser Aufbau schränkt die Gestaltungsfreiheit der einzelnen Elemente stark ein. Von entscheidender Bedeutung ist auch der bereits eingangs näher erläuterte Kostennachteil bei der Herstellung von Blechpressteilen für Kleinserien. Werden die Knotenelemente wie vorgeschlagen durch Giessen, Spritzen oder Schmieden hergestellt, dann lassen sich diese nicht nur kostengünstig herstellen, sondern es ist auch in technischer Hinsicht dafür gesorgt, dass die Bauteile entsprechend ihren Aufgaben optimal ausgebildet werden können. Es muss wohl nicht näher ausgeführt werden, dass ein Gussteil in dieser Hinsicht die besten Voraussetzungen bietet. So kann es komplizierteste Konturen aufweisen und mit Rippen oder Aufnahmen für anschliessende Bauteile versehen sein. Solche Aufnahmen können beispielsweise ein Halteflansch für einen Scheibenwischer oder eine Aufnahme für ein Türscharnier sein. Bei den vorbekannten Konstruktionen sind dafür separate Bauteile erforderlich, die in eigenen Vorrichtungen erst an der Rahmenkonstruktion befestigt werden müssen.

Ein besonderes Merkmal des neuen Wagenkastenaufbaus besteht darin, dass ein oder mehrere Knotenelemente sich über den Anschlussbereich der Hohlprofile hinaus erstrecken und Abschnitte der tragenden Struktur bilden, welche unregelmässige und deshalb nicht durch Strangpressprofile erzeugbare Querschnitte aufweisen. Gerade solche komplizierten Abschnitte, beispielsweise gebildet durch Anschlüsse im Bereich einer Federbeinaufnahme, lassen die Vorteile des neuen Aufbaus deutlich werden. Solche Abschnitte werden in konventioneller Bauweise durch eine Vielzahl von zusammengesetzten Blechen hergestellt. Neben dem Aufwand für das Zusammensetzen (Schweissen) und das Fixieren für diesen Arbeitsgang, sind auch viele Presswerkzeuge erforderlich, die bei einer Kleinserie kaum amortisierbar sind.

Besonders vorteilhaft ist, wenn zumindest ein Teil der Hohlprofile wenigstens an einem Ende mit einer Ausklinkung versehen ist, derart, dass die Hohlprofile senkrecht zu ihrer Erstreckung an die zugeordneten Knotenelemente anfügbar sind. Werden nämlich alle Hohlprofile in die zugeordneten Elemente eingesteckt, dann lassen sich die letzten Hohlprofile nur mit Mühe und durch Verwinden des bereits zusammengesteckten Rahmens einfügen. Ausserdem ermöglicht das formschlüssige Anlegen einzelner Hohlprofile ohne Probleme den Einsatz von Handhabungsautomaten und schafft die Voraussetzung für ein leichteres Auswechseln beschädigter Hohlprofile im Reparaturfall. Die Hohlprofile können durch die bekannten Verbindungstechniken, insbesondere durch Kleben, Schweissen, Löten und Schrauben mit den Knotenelementen verbunden werden.

Ein Ausführungsbeispiel der Erfindung ist in der Zeichnung dargestellt und wird nachfolgend näher beschrieben. Es zeigt

Fig. 1 in perspektivischer Darstellung die linke Seite des tragenden Aufbaus eines Personenkraftwagens und

Fig. 2 den tragenden Aufbau desselben Personenkraftwagens im Übergangsbereich zwischen Fahrgastraum und Motorraum.

Die in der Zeichnung in Explosionsdarstellung gezeigten Bauteile gliedern sich in drei Gruppen. Zum einen sind es aus Leichtmetall hergestellte Stranpressprofile, die sich durch einen gleichbleibenden Querschnitt auszeichnen, vom Ausgangsmaterial nur abgelängt und gegebenenfalls gebogen werden. Die nicht gebogenen Teile können wahlweise auf den einander gegenüberliegenden Seiten des symmetrisch aufgebauten Wagenkastens Verwendung finden.

Die zweite Gruppe beinhaltet aus Leichtmetallguss bestehende Knotenelemente unterschiedlichster Formgebung. Die Knotenelemente verbinden nicht nur die Strangpressprofile, sondern übernehmen teilweise zusätzliche Aufgaben, so z.B. die Bildung von Anschlussträgern oder Aufnahmen für anschliessende Aggregate.

Die letzte Gruppe der tragenden Elemente beinhaltet Bauteile aus Blech, wobei Leichtmetall- und Eisenbleche oder entsprechend gefestigte Kunststoffe Verwendung finden können. Durch diese Bleche werden insbesondere solche Bauteile gebildet, welche sich durch Blech einfacher herstellen lassen, giesstechnisch also aufwendiger sind und auch schwerer ausfallen würden.

Die einzelnen tragenden Elemente sind grösstenteils durch Stecken oder formschlüssiges Anlegen zusammengefügt. Dafür ist teilweise eine besondere Ausbildung der Enden der jeweiligen Bauteile erforderlich, auf die später noch eingegangen wird. Neben dem Formschluss werden die Bauteile durch bekannte Verbindungstechniken zusätzlich gesichert. Bei vielen Verbindungen, insbesondere wenn die Bauteile aus unterschiedlichen Werkstoffen bestehen, hat sich das Verkleben als besonders günstig erwiesen.

Nachfolgend werden die in der Zeichnung dargestellten Bauteile und deren Verbindung näher beschrieben.

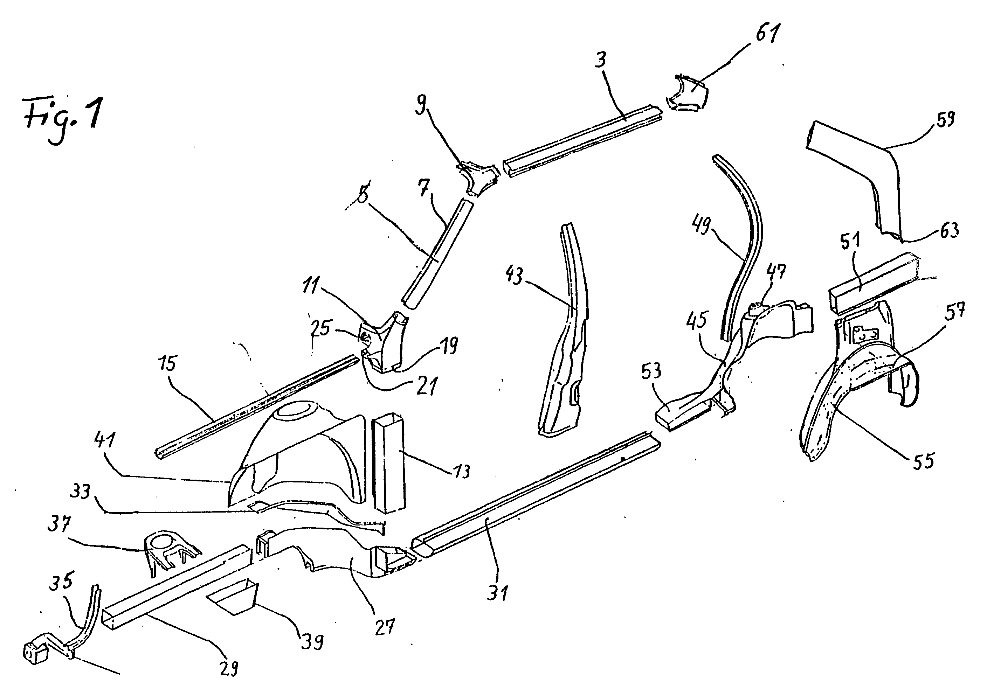

Ein in Fig. 1 gezeigtes Dachrahmenseitenteil 3 besteht aus einem geraden Abschnitt eines endlos hergestellten Strangpressprofiles.

In gleicher Weise hergestellt, jedoch von anderem Querschnitt ist ein vorderer Dachpfosten 5, welcher mit einem Flansch 7 zur Aufnahme einer nicht dargestellten Windschutzscheibe versehen ist und den Ausschnitt für die Fahrertür mit begrenzt. Die einander zugewandten Enden des Dachrahmenseitenteils 3 und des vorderen Dachpfostens 5 sind in einem vorderen Dachknoten 9 gehalten. Der vordere Dachknoten 9 besteht aus zwei Schalen, wobei die eine Schale zum Fahrzeuginnenraum gerichtet ist, die andere Schale den Knoten nach aussen hin begrenzt. Bei geöffneten vorderen Dachknoten 9 lassen sich die Enden des Dachrahmenseitenteils 3, des vorderen Dachpfostens 5 und das Ende eines nicht dargestellten Dachrahmenquerteiles in den Knoten einlegen und mit diesem verbinden. Das Verbinden kann bei geöffneten vorderen Dachknoten 9 mittels eines Klebers, einer Schraubung o.ä. Verbindungstechniken durchgeführt werden.

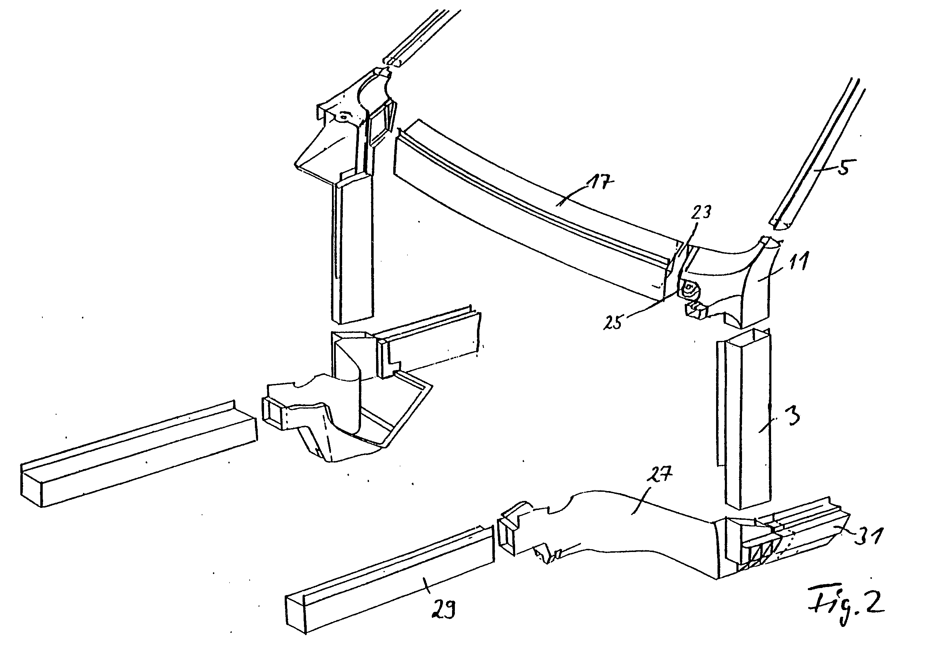

Das dem vorderen Dachknoten 9 abgewandte Ende des vorderen Dachpfostens 5 ist in einem Knoten 11 aufgenommen. Der Knoten 11 bildet einen Vierfachknoten, er nimmt also neben dem vorderen Dachpfosten 5 weitere Strangpressprofile auf. Es sind dies noch ein vorderer Türpfosten 13, eine Kotflügelbank 15 und ein vorderer Querträger 17, welcher aus Fig. 2 ersichtlich ist. Die den vorderen Türpfosten 13 und die Kotflügelbank 15 bildenden geraden Strangpressprofile sind rechtwinkelig abgelängt und über Ansätze 19 bzw. 21 des Knotens 11 geschoben, deren Aussenkontur der Innenkontur der zugeordneten Bauteile 13 und 15 angepasst ist. Der Knoten 11 ist im Gegensatz zum vorderen Dachknoten 9 nicht teilbar. Damit beim Zusammenstecken der Enden der Strangpressprofile in die zugeordneten Gussknoten bei den letzten Operationen keine Schwierigkeiten auftreten, ist es notwendig, dass entweder einzelne Knoten zu öffnen sind (wie der vordere Dachknoten 9) oder dass eine Möglichkeit vorgesehen wird, wie ein Strangpressprofil ohne Einschieben in einen Gussknoten formschlüssig mit diesem verbunden werden kann. Eine solche Möglichkeit ist beim Anschluss des vorderen Querträgers 17 an den Knoten 11 gezeigt. Der vordere Querträger 17 ist dazu mit einer Ausklinkung 23 versehen, deren Gegenstück am Knoten 11 mit angeformt ist. Dadurch lässt sich der vordere Querträger 17, gebildet durch ein angelängten, gebogenen und mit der Ausklinkung 23 versehenen Strangpressprofil, etwa senkecht zu seiner Längserstreckung formschlüssig an den Knoten 11 anlegen und verbinden. Im vorderen Bereich des Knotens 11 ist ausserdem ein Flansch 25 mit einer Aufnahmebohrung für einen Scheibenwischer angeformt.

Das untere Ende des vorderen Türpfostens 13 ist in einem Knoten 27 aufgenommen. Wie aus der Zeichnung unmittelbar ersichtlich, ist der Knoten 27 so ausgebildet, dass er den vorderen Längsträger 29 mit einem Schweller 31 seitlich versetzt verbindet. Der Knoten 27 ist also nicht nur ein Dreifachverbinder zwischen vorderen Türpfosten 13, dem vorderen Längsträger 29 und dem Schweller 31, sondern bildet selbst einen Längsträger. Um den Knoten 27 leichter giessen zu können, ist er nach oben offen. Diese Öffnung kann vor der Montage der Strangpressprofile durch ein Schliessteil 33 verschlossen werden, wenn die Strangpressprofile wie beim Knoten 11 nur eingeschoben werden. Es bietet sich jedoch auch eine Festlegungsmöglichkeit der Strangpressprofile wie beim vorderen Dachknoten 9 gezeigt, nämlich dass die Strangpressprofile in den Knoten eingelegt und dann erst das Schliessteil 33 aufgesetzt wird. An den als gerades Strangpressprofil ausgebildeten vorderen Längsträger 29 sind mehrere Bauteile angeschlossen, welche allesamt aus einem oder mehreren gepressten Blechen hergestellt sind. Es sind dies ein als Schweissgruppe ausgebildetes äusseres Windfangteil 35, welches den vorderen Längsträger 29 abschliesst, eine Konsole 37 für ein Motorlager, ein Bock 39 zur Anbringung eines Hilfsrahmens und als Schweissgruppe ein Radhaus 41, welches zusätzlich noch am Knoten 27, im vorderen Türpfosten 13 und der Kotflügelbank 15 befestigt ist.

Der Einfachheit halber ist eine Mittelsäule 43, welche sich zwischen den Dachrahmenseitenteil 3 und dem Schweller 31 erstreckt, ebenfalls aus Blech hergestellt.

Das rückwärtige Ende des Schwellers 31 mündet in einen hinteren Knoten 45, welcher neben seinen Anschlussfunktionen auch eine Federbeinaufnahme 47 für die Hinterachse des Fahrzeuges bildet. An den Knoten 45 ist neben dem Schweller 31 eine Türsäule 49 (gebildet durch ein gebogenes Strangpressprofil) und ein aus einem geraden Strangpressprofil bestehender hinterer Längsträger 51 angeschlossen. Die Verbindung der einzelnen Strangpressprofile mit dem hinteren Knoten 45 kann wie bei dem vorbeschriebenen Knoten erfolgen. Zur verbesserten Krafteinleitung ist ausserdem durch einen Fortsatz 53 am Knoten 45 ein grossflächiger Anlagebereich mit dem Schweller 31 sichergestellt.

An den hinteren Knoten 45 wird im Bereich der Federbeinaufnahme 47 ein als Blechschweissgruppe ausgebildetes hinteres Radhaus 55 angebracht. An der Aussenfläche 57 des hinteren Radhauses schliesst sich stumpf ein hinterer Pfosten 59 an, dessen oberes Ende in einem hinteren Dachknoten 61 aufgenommen ist. Der hintere Pfosten 59 ist ebenfalls als Strangpressprofil ausgebildet. Dieses Strangpressprofil wird nach dem Ablängen gebogen und an dem dem hinteren Radhaus 55 zugewandten Ende mit einem Flansch 63 versehen, der der Befestigung dient.

## Patentansprüche

1. Wagenkasten für Personenkraftwagen mit folgenden Merkmalen:

a) Die tragende Struktur des Wagenkastens besteht aus Hohlprofilen (3, 5, 13, 15, 17, 29, 31, 49, 51, 59), welche durch Knotenelemente (9, 11, 27, 45, 61) miteinander verbunden sind;

b) die Hohlprofile und die Knotenelemente bestehen aus Leichtmetall;

c) die Hohlprofile sind Strangpressprofile, welche zumindest teilweise gebogen sind und im wesentlichen einen gleichbleibenden Querschnitt aufweisen;

d) ein oder mehrere Knotenelemente sind durch mindestens zwei Schalen gebildet, welche in einem Giess-, Spritz- oder Schmiedeverfahren hergestellt sind und die Endbereiche der eingelegten Hohlprofile umschliessen;

e) auf jeder Seite des Wagenkastens ist ein Knotenelement (27) vorgesehen, welches den Türschweller (31) mit dem vorderen Türpfosten (13) und einem vorderen Längsträger (29) verbindet, wobei ein Ende des Knotenelementes (27) den Türschweller (31) und den vorderen Türpfosten (13) aufnimmt und das andere Ende des Knotenelementes bis hin zu dem beabstandet angeordneten Längsträger (29) geführt ist;

f) auf jeder Seite des Wagenkastens ist ein Knotenelement (45) vorgesehen, welches den Türschweller (31) mit einem hinteren Karosseriepfosten (49) und einem hinteren Längsträger (51) verbindet und gleichzeitig als Federbeinaufnahme (47) für die Hinterachse des Fahrzeuges ausgebildet ist.

2. Wagenkasten nach Anspruch 1, dadurch gekennzeichnet, dass zumindest ein Teil der Hohlprofile (17) wenigstens an einem Ende mit einer Ausklinkung (23) versehen ist, derart, dass die Hohlprofile senkrecht zu ihrer Erstreckung an die zugeordneten Knotenelemente (11) anfügbar sind.

## Claims

1. Vehicle body for passenger cars with the following features:

a) The supporting structure of the vehicle body consists of hollow sections (3, 5, 13, 15, 17, 29, 31, 49, 51, 59) which are connected to one another by means of junction elements (9, 11, 27, 45, 61);

b) the hollow sections and the junction elements consist of light metal;

c) the hollow sections are extruded sections at least some of which are curved and essentially exhibit a constant cross-section;

d) one or more junction elements are formed by at least two shells which are produced by a casting, injection moulding or forging process and which surround the end regions of the inserted hollow sections;

e) on each side of the vehicle body there is provided a junction element (27) which connects the door sill (31) to the front door post (13) and to a front longitudinal member (29), one end of the junction element (27) receiving the door sill (31) and the front door post (13) and the other end of the junction element being guided up to the longitudinal member (29) located at a distance;

f) on each side of the vehicle body there is provided a junction element (45) which connects the door sill (31) to a rear body post (49) and to a rear longitudinal member (51) and which, at the same time, is designed as a telescopic strut receptacle (47) for the rear axle of the vehicle.

2. Vehicle body according to Claim 1, characterized in that at least some of the hollow sections (17) are equipped, at least at one end, with a notch (23), in such a way that the hollow sections can be attached to the associated junction elements (11) perpendicularly relative to their extension.

## Revendications

1. Carrosserie pour voiture particulière, présentant les caractéristiques suivantes:

a) la structure portante de la carrosserie est constituée par des profilés creux (3, 5, 13, 15, 17, 29, 31, 49, 51, 59) qui sont unis les uns aux autres par des éléments de jonction (9, 11, 27, 45, 61);

b) les profilés creux et les éléments de jonction sont faits de métal léger;

c) les profilés creux sont des profilés filés qui sont courbés, au moins pour certains d'entre eux, et qui présentent essentiellement une section constante;

d) un ou plusieurs éléments de jonction sont constitués par au moins deux coquilles qui sont fabriquées par un procédé de coulée, d'injection ou de forgeage et qui enserrent les parties d'extrémité des profilés creux insérés;

e) de chaque côté de la carrosserie, il est prévu un élément de jonction (27) qui relie le seuil de porte (31) au montant avant (13) de porte et à un longeron avant (29), l'une des extrémités de l'élément de jonction (27) recevant le seuil de porte (31) et le montant avant (13) de porte et l'autre extrémité de l'élément de jonction s'étendant jusqu'au longeron (29) qui est disposé à distance;

f) de chaque côté de la carrosserie, il est prévu un élément de jonction (45) qui relie le seuil de porte (31) à un montant arrière (49) de la carrosserie et à un longeron arrière (51) et qui est en même temps réalisé sous forme de logement (47) pour une jambe de force à ressort arrière de l'essieu arrière de la voiture.

2. Carrosserie selon la revendication 1, caractérisée en ce que, pour certains d'entre eux au moins, les profilés creux (17) sont munis d'une encoche (23) à l'une au moins de leurs extrémités, de telle manière que les profilés creux puissent être présentés aux éléments de jonction associés (11) dans une direction perpendiculaire à leur sens longitudinal.

Fig. 1

Fig. 2